# EUROPÄISCHE PATENTANMELDUNG

(11) **EP 1 308 973 A2**
(43) Veröffentlichungstag der Anmeldung: **07.05.2003**
(21) Anmeldenummer: 02090351.4
(22) Anmeldetag: 10.10.2002
(51) Int. Cl.: H01H 9/34

(54) **Elektrischer Leistungsschalter mit einem Gehäusekörper und einem diesen frontseitig abdeckenden Bedienpult**

(30) Priorität: 30.10.2001 DE 10154903
(71) Anmelder: SIEMENS AKTIENGESELLSCHAFT, 80333 München (DE)
(72) Erfinder: Bach, Michael, 12437 Berlin (DE); Hahn, Michael, 12357 Berlin (DE); Schmidt, Detlev, 12055 Berlin (DE); Sebekow, Michael, 13125 Berlin (DE); Seidler-Stahl, Guenter, 13359 Berlin (DE); Thiede, Ingo, 12159 Berlin (DE); Tuerkmen, Sezai, 13629 Berlin (DE)

(57) **Zusammenfassung**

Ein Leistungsschalter (1) besitzt Funktionsgruppen, wie Strombahnen, Lichtbogenlöschkammern, Federspeicher, Antriebsvorrichtung, Auslöser und weitere Aggregate, die in einem Gehäuse untergebracht sind, das einen Kunststoffkörper sowie ein dieses frontseitig abdeckendes Bedienpult (2) aus Kunststoff umfasst. Gegen eine Beanspruchung des Bedienpultes (2) durch einen inneren Überdruck im Gehäuse des Leistungsschalters (1), wie er beim Schalten eines hohen Stromes auftreten kann, ist das Bedienpult (2) durch eine Entlastungsklappe (15) geschützt, die in einem an eine Frontfläche (8) des Bedienpultes (2) anschließenden Wandteil (10) angeordnet ist. Die Entlastungsklappe (15) gibt bei Überdruck eine Austrittsöffnung (14) in dem Wandteil (10) frei und erlaubt das Abströmen von Gasen etwa parallel zur Frontfläche (8) des Bedienpultes (2).

## Beschreibung

Die Erfindung betrifft einen elektrischen Leistungsschalter mit einem Funktionsgruppen wie Strombahnen, Lichtbogenlöschkammern, Federspeicher, Antriebsvorrichtung, Auslöser und weitere Aggregate umschließenden Gehäuse, das einen als Träger der Funktionsgruppen ausgebildeten Kunststoffkörper sowie ein diesen frontseitig abdeckendes, gleichfalls aus Kunststoff bestehendes Bedienpult umfasst, das in einer rechteckigen Frontfläche Fenster- und Durchtrittsöffnungen für Bedienund Einstellorgane aufweist und rahmenartig von der Frontfläche ausgehende und etwa rechtwinklig zu dieser angeordnete Wandteile besitzt.

Ein Leistungsschalter dieser Art ist beispielsweise durch die US 4,764,650 bekannt geworden. Ein ähnlicher Leistungsschalter ist der US 5,545,867 zu entnehmen. In den Löschkammern von Leistungsschaltern dieser Art entsteht beim Abschalten insbesondere großer Ströme ein beträchtlicher Druck, der durch die Energie der Schaltlichtbögen in den Lichtbogenlöschkammern und die Gasung von Schaltlichtbögen beaufschlagter Kunststoffteile bedingt ist. Obwohl die Lichtbogenlöschkammern über Austrittsöffnungen mit der umgebenden Atmosphäre des Leistungsschalters in Verbindung stehen und der in den Löschkammern entstehende Druck nach außen entweichen kann, werden auch andere Teile des Leistungsschalters durch den in den Lichtbogenlöschkammern auftretenden Druck beansprucht. Dies hängt damit zusammen, dass die Lichtbogenlöschkammern keine vollständig geschlossenen Körper sind, sondern mit anderen Funktionsgruppen des Leistungsschalters in mechanischer Verbindung stehen. Im Zuge solcher Verbindungen sind Durchtrittswege vorhanden, entlang derer sich unter Druck stehende Schaltgase ausbreiten können. Insbesondere wirkt der Druck von Schaltgasen auf das frontseitige Bedienpult der Leistungsschalter. Eine hierdurch hervorgerufene kurzzeitige Biegung hat sich bei bisher gebräuchlichen Leistungsschaltern der hier betrachteten Art nicht als störend erwiesen. Im Rahmen der Weiterentwicklung von Leistungsschaltern hat es sich jedoch gezeigt, dass die Beanspruchung der Bedienpulte durch zwei Einflüsse erheblich steigen kann. Der eine dieser Einflüsse ist eine Steigerung des Schaltvermögens der Leistungsschalter (Unterbrechung von Kurzschlussströmen von z. B. 100 000 A) bei gleichem Volumen des Gehäuses wie bisher mit entsprechend höherem Gasdruck beim Schalten. Der andere Einfluss ist eine erhöhte Anzahl von Bedien- und Einstellorganen sowie nachrüstbaren Ausrüstungen wie Sicherheitsschlösser oder Verriegelungen. Dies führt zu einer entsprechend großen Zahl von Durchtrittsöffnungen und bei Bedarf heraustrennbaren Teilflächen, die insgesamt die Festigkeit gegen einen inneren Überdruck im Gehäuse des Leistungsschalters mindern.

An sich könnte man daran denken, die erhöhten Beanspruchungen dadurch zu berücksichtigen, dass das Bedienpult insgesamt widerstandsfähiger ausgebildet wird und an besonders stark beanspruchten Stellen Verstärkungsrippen erhält. Diese Maßnahmen erhöhen jedoch das Gewicht, den Platzbedarf und die Herstellungskosten nicht unerheblich. Andererseits kommt es im Interesse der Sicherheit der Benutzer des Leistungsschalters nicht in Betracht, beispielsweise an der Durchtrittsstelle von Bedienelementen einen solchen Zwischenraum vorzusehen, dass sich an diesen Stellen durch Abströmen unter Druck stehender Gase ein Druckausgleich ergibt.

Der Erfindung liegt hiervon ausgehend die Aufgabe zugrunde, im wesentlichen unter Beibehaltung der bisherigen Bauweise des Bedienpultes die erwünschte Beständigkeit gegen einen inneren Gasdruck im Leistungsschalter auch bei einem erhöhten Schaltvermögen zu gewährleisten.

Diese Aufgabe wird gemäß der Erfindung dadurch gelöst, dass in einem an die Frontfläche anschließenden Wandteil des Bedienpultes eine Austrittsöffnung sowie eine die Austrittsöffnung abdeckende, durch einen inneren Überdruck des Gehäuses zu öffnende und dabei einen etwa parallel zur Frontfläche des Bedienpultes gerichteten Strömungsweg für aus dem Gehäuse austretende Gase freigebende Entlastungsklappe angeordnet ist. Hierdurch wird erreicht, dass sich ein plötzlich auftretender Gasdruck nicht auf die verhältnismäßig große Frontfläche des Bedienpultes auswirken kann, sondern durch das Öffnen der Entlastungsklappe in eine für eine Bedienungsperson ungefährliche Richtung abgeleitet wird. Dabei bleibt jedoch die vorgeschriebene Schutzart des Bedienpultes hinsichtlich des Eindringens von Fremdkörpern in vollem Umfang erhalten.

Es erweist sich als zweckmäßig, wenn die Entlastungsklappe in dem oben an die Frontfläche des Bedienpultes anschließenden Wandteil aufgenommen ist und dass der genannte Wandteil eine Anschlagfläche für die im Ruhezustand geschlossene Entlastungsklappe aufweist.

Es empfiehlt sich, die Entlastungsklappe am Bedienpult mit einer sich parallel zur Frontfläche des Bedienpultes erstreckenden Scharnierachse schwenkbar anzuordnen. Dabei kann die Scharnierachse nahe einer Kante am Übergang von der Frontfläche zu dem die Entlastungsklappe aufnehmenden oberen Wandteil angeordnet sein. Bei horizontaler Anordnung der Entlastungsklappe in dem oberen Wandteil wirkt die Schwerkraft als Rückstellkraft. Die Entlastungsklappe kehrt somit nach dem Entweichen des Überdruckes selbsttätig in ihre geschlossene Ruhelage zurück.

Eine Einrichtung zur Druckentlastung nach der Erfindung ist auch bei Leistungsschaltern anwendbar, die in bekannter Weise als Einschub-Leistungsschalter in einer Schaltzelle einer Schaltanlage oder eines Schaltschrankes verfahrbar angeordnet ist und dabei mit dem Bedienpult durch eine Rahmenöffnung einer Tür der Schaltzelle hindurch ragen. Für diese Anwendung kann der Leistungsschalter im Rahmen der Erfindung eine solche Bemessung der Entlastungsklappe und des diese aufnehmenden Wandteiles relativ zu dem zwischen einer Betriebsstellung und einer Trennstellung des Leistungsschalters in der Schaltzelle zurückzulegenden Fahrweg aufweisen, dass die Entlastungsklappe in der Betriebsstellung des Leistungsschalters vollständig hinter der die Wandteile umgebenden Rahmenöffnung der Tür und in der Trennstellung nur teilweise vor der Rahmenöffnung steht. Hierdurch wird erreicht, dass beim Auftreten eines Überdruckes in der Betriebsstellung des Leistungsschalters die abzuführenden Gase in der Schaltzelle hinter der Zellentür abgeleitet werden und somit eine Bedienungsperson vor der Tür nicht gefährden können. Befindet sich andererseits der Leistungsschalter in seiner Trennstellung, so wird die Entlastungsklappe von der Rahmenöffnung noch teilweise überdeckt und kann somit nicht zufällig oder absichtlich geöffnet werden. Damit ist die Einhaltung der vorgeschriebenen Schutzart bezüglich des Eindringens von Fremdkörpern sichergestellt.

Soweit im vorliegenden Zusammenhang von einer Scharnierachse gesprochen wurde, ist zu bemerken, dass es sich hierbei um eine ideelle Achse handelt, die beispielsweise durch zwei an den gegenüberliegenden Enden der Entlastungsklappe befindliche Lagerzapfen und diese aufnehmende Lageröffnungen gebildet sein kann.

Bei elektrischen Verteilerschränken nach der DE 44 42 022 C2 oder Schalt- oder Abgangskästen für Schienenverteiler nach der EP 0 435 123 B1 ist es bereits bekannt, Einrichtungen zur Druckentlastung vorzusehen, die das Abströmen von Gasen ermöglichen, wenn im Inneren der Schränke bzw. Kästen ein Störlichtbogen aufgetreten ist. Bei dem Verteilerschrank nach der DE 44 42 022 C2 dient dabei die Tür des Verteilerschrankes selbst als Druckentlastungseinrichtung. Hierzu wird die Verriegelung der Tür durch die Druckwelle aufgehoben, jedoch wird der Öffnungsweg der Tür durch eine Fangeinrichtung begrenzt. Bei dem Schaltkasten nach der EP 0 435 123 B1 sind dagegen bestimmte, um einen geschwächten Querschnitt aufzubiegende Wände vorgesehen, die sich je nach der Höhe des Druckes unterschiedlich weit aufbiegen. Diese Einrichtungen sind für einen einmaligen Schadensfall ausgelegt, da ein Störlichtbogen in der Regel so starke Beschädigungen hervorruft, dass die betreffenden Betriebsmittel entweder erneuert oder einer grundlegenden Überarbeitung unterzogen werden müssen. Dem gegenüber stellt der in einem Niederspannungs-Leistungsschalter in Abhängigkeit von dem zu schaltenden Strom auftretende Überdruck ein normales betriebliches Ereignis dar und kann demzufolge während der Lebensdauer eines Leistungsschalters mehrfach auftreten. Die Entlastungsklappe nach der Erfindung ermöglicht eine solche mehrfache Betätigung ohne Ersatz oder Reparatur, da sie sich selbsttätig zurückstellt und die freigegebene Austrittsöffnung wieder verschließt. Damit unterscheidet sich die Entlastungsklappe nach der Erfindung nach Anwendung, Aufbau und Wirkungsweise grundsätzlich von den bekannten Schutzeinrichtungen gegen Störlichtbögen.

Die Erfindung wird im Folgenden anhand des in den Figuren dargestellten Ausführungsbeispieles näher erläutert.

Die Figur 1 zeigt einen Niederspannungs-Leistungsschalter schematisch von vorn mit Blick auf ein Bedienpult.

Die Figur 2 zeigt im Schnitt II-II in Figur 1 und in abgebrochener Darstellung einen Teil eines Bedienpultes mit geschlossener Entlastungsklappe.

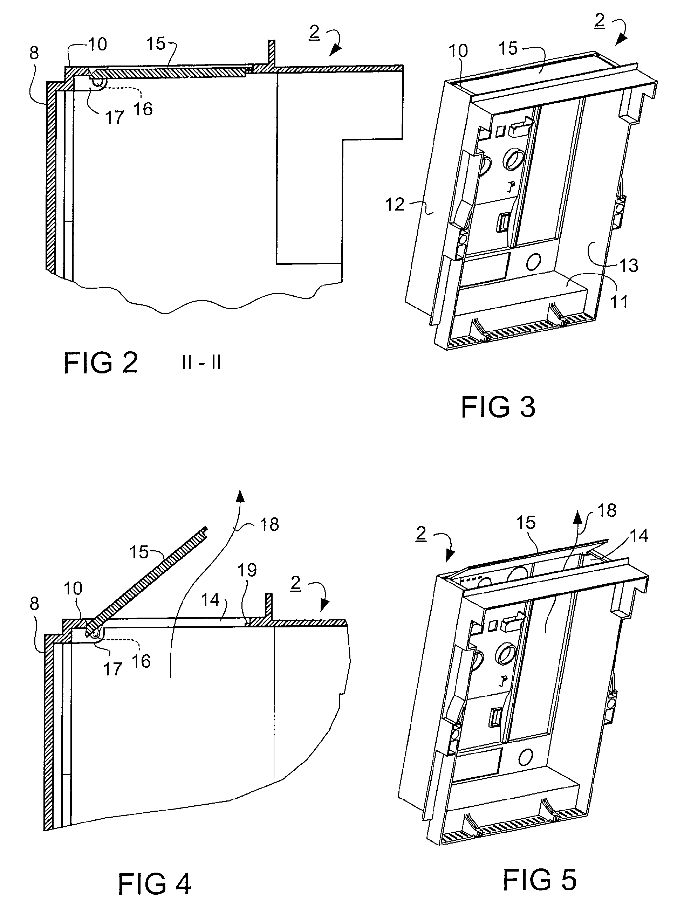

Eine perspektivische Darstellung mit Blick auf die Innenseite des Bedienpultes mit geschlossener Entlastungsklappe zeigt die Figur 3.

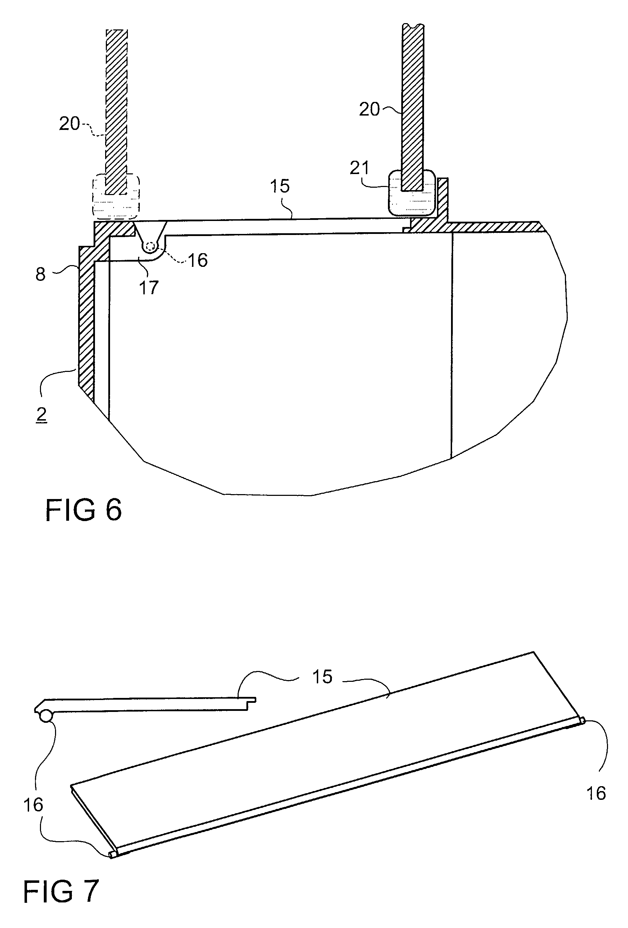

Die Figuren 4 und 5 sind den Figuren 2 und 3 entsprechende Darstellungen bei geöffneter Entlastungsklappe.

Die Figur 6 zeigt in einer vergrößerten Darstellung unterschiedliche Positionen eines Bedienpultes relativ zu einer Tür einer Schaltzelle, wobei in ausgezogener Stellung die Tür bei ausgefahrenem Leistungsschalter und in gestrichelter Darstellung in der Betriebsstellung des Leistungsschalters gezeigt ist.

Die Figur 7 zeigt eine Entlastungsklappe in einer Stirnansicht und in einer perspektivischen Ansicht.

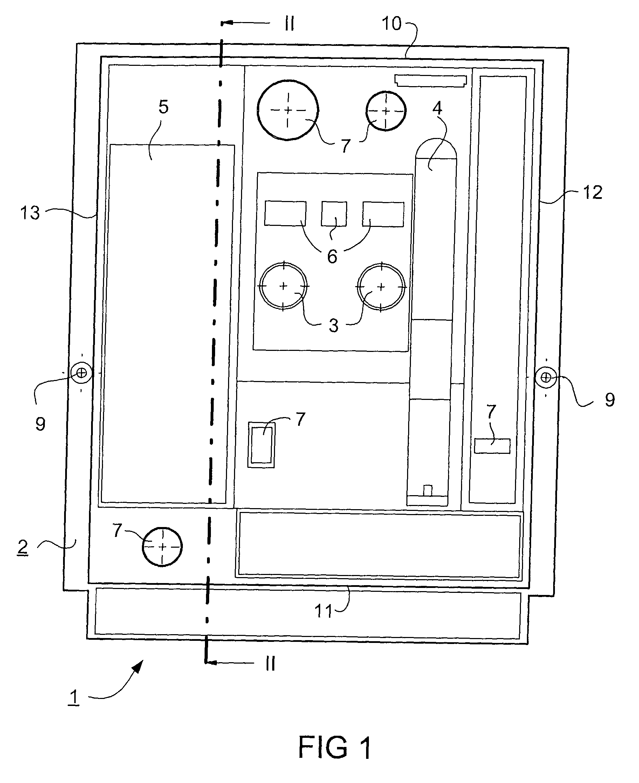

Der in der Figur 1 von vorn gezeigte Niederspannungs-Leistungsschalter 1 weist frontseitig ein Bedienpult 2 auf, an dem alle für den Benutzer wesentlichen Bedien- und Einstellorgane zugänglich sind. Hierzu gehören insbesondere Drucktaster 3 zum Einschalten und Ausschalten des Leistungsschalters 1 sowie ein Betätigungshandgriff 4 zum Spannen eines Energiespeichers. Links neben den Drucktastern 3 befindet sich ein gesondertes Bedienfeld eines elektronischen Überstromauslösers, dessen Einstellorgane zur Vereinfachung fortgelassen sind. Oberhalb der Drucktaster 3 befinden sich Anzeigeorgane für die Schaltstellung, den Zustand des Energiespeichers und die Einschaltbereitschaft. Teilflächen 7 des Bedienpultes sind bei Bedarf heraustrennbar, um weiteres Zubehör, beispielsweise ein Sicherheitsschloss oder eine Einstecköffnung für ein Bedienwerkzeug eines Fahrantriebes, zugänglich zu machen. Diese Teilflächen sind ungeachtet ihrer unterschiedlichen Größe und Form mit 7 bezeichnet.

Das Bedienpult 2 besitzt seitliche Befestigungslöcher 9 zur Anbringung an einem rückseitigen Kunststoffkörper der erwähnten Art, der nicht dargestellt ist und in einer zweiteiligen Ausführung etwa der Figur 1 der DE 199 58 943 Al entsprechen kann.

Die mit den vorstehend erwähnten Bedien- und Einstellorganen bestückte Frontfläche 8 des Bedienpultes 2 ist rahmenartig von Wandteilen 10, 11, 12 und 13 umschlossen, die etwa rechtwinklig zu der Frontfläche 8 stehen und näher aus den Figuren 2 und 3 ersichtlich sind. Eine Austrittsöffnung 14 erstreckt sich über den größten Teil des oberen Wandteiles 10 (Figuren 2 und 3). Im normalen Zustand ist die Austrittsöffnung 14 durch eine Entlastungsklappe 15 verschlossen, die als Einzelteil in der Figur 7 gezeigt ist. Wie daraus zu ersehen ist, weist die Entlastungsklappe 15 eine im Wesentlichen rechteckige flache Gestalt auf und besitzt nahe ihrer einen Kante an den Enden abragende Lagerzapfen 16. Diese bilden zusammen mit am Bedienpult 2 angeformten Lagerböcken 17 eine Scharnierachse, die sich parallel zur Frontfläche 8 nahe der Kante am Übergang zu dem Wandteil 10 erstreckt. Entsteht aus den eingangs geschilderten Gründen im Leistungsschalter 1 ein Überdruck, so wird die Entlastungsklappe 15 entsprechend den Figuren 4 und 5 durch Schwenkung um die Lagerzapfen 16 geöffnet. Die aufgetretenen Gase können nun nach oben abströmen, wobei sich die Strömungsrichtung aufgrund der Anordnung der Austrittsöffnung 14 und der Lage der Scharnierachse etwa parallel zur Frontfläche 8 erstreckt, wie in den Figuren 4 und 5 durch einen Pfeil 18 angedeutet ist. Nach erfolgter Druckentlastung kehrt die Entlastungsklappe 15 unter dem Einfluss der als Rückstellkraft wirkenden Schwerkraft in ihre Ausgangsstellung (Figuren 2 und 3) zurück und liegt dann mit ihrer den Lagerzapfen 16 gegenüberliegenden Kante an einer Anschlagfläche 19 des Wandteiles 10 an.

Ist der Leistungsschalter 1 (Figur 1) in eine Schaltzelle eingebaut, so ermöglicht die rahmenartige Anordnung der Wandteile 10, 11, 12 und 13 eine Verschiebung des Leistungsschalters 1 aus seiner Betriebsstellung in eine Trennstellung bei geschlossener Tür 20 der Schaltzelle. Diese weist eine mit einem Dichtungselement 21 ausgekleidete Rahmenöffnung für das Bedienpult 2 des Leistungsschalters 1 auf, wie dies schematisch in der Figur 6 gezeigt ist. Dabei veranschaulicht die rechts gezeigte ausgezogene Darstellung der Tür 21 die Position, wenn sich der Leistungsschalter 1 in seiner Trennstellung befindet. Die Entlastungsklappe 15 ist dabei von der Tür 20 bzw. dem Dichtelement 21 soweit überdeckt, dass die Entlastungsklappe nicht zufällig oder missbräuchlich geöffnet werden kann. Damit bleibt der Schutz des Leistungsschalters gegen Eindringen von Fremdkörpern vollständig erhalten.

Wird der Leistungsschalters 1 in seine Betriebsstellung überführt, so befindet sich entsprechend der gestrichelten Darstellung in der Figur 6 die Tür 20 nahe der vorderen Kante des Bedienpultes 2. Die Entlastungsklappe 15 ist nun frei und kann sich entsprechend der Darstellung in den Figuren 4 und 5 beim Auftreten eines Überdruckes im Gehäuse des Leistungsschalters 1 öffnen. Austretende Gase strömen dabei etwa parallel zu der Tür 20 im inneren der Schaltzelle ab.

Vorstehend wurde eine Ausführung der Erfindung beschrieben, bei welcher sich die Entlastungsklappe in einem an die Frontfläche oben anschließenden Wandteil befindet. Die Erfindung kann jedoch auch mit einer seitlich oder unten angeordneten Entlastungsklappe verwirklicht werden, wobei eine Feder vorgesehen kann, um eine Rückstellung in die Ausgangslage zu bewirken. Gleichfalls liegt es im Rahmen der Erfindung, zwei oder mehrere Entlastungsklappen an demselben oder verschiedenen Wandteilen anzuordnen. Bei allen Ausführungsformen kann ferner anstelle der aus Lagerzapfen und Lagerböcken bestehenden Gelenkanordnung eine andere scharnierartige Lagerung benutzt werden, insbesondere ein einteiliges Kunststoff-Biegescharnier.

## Patentansprüche

1. Elektrischer Leistungsschalter (1) mit einem Funktionsgruppen wie Strombahnen, Lichtbogenlöschkammern, Federspeicher, Antriebsvorrichtung, Auslöser und weitere Aggregate umschließenden Gehäuse, das einen als Träger der Funktionsgruppen ausgebildeten Kunststoffkörper sowie ein diesen frontseitig abdeckendes, gleichfalls aus Kunststoff bestehendes Bedienpult (2) umfasst, das in einer rechteckigen Frontfläche (8) Fenster- und Durchtrittsöffnungen für Bedien- und Einstellorgane aufweist und rahmenartig von der Frontfläche (8) ausgehende und etwa rechtwinklig zu dieser angeordnete Wandteile (10, 11, 12, 13) besitzt,
**dadurch gekennzeichnet, dass**
in einem an die Frontfläche (8) anschließenden Wandteil (10) des Bedienpultes (2) eine Austrittsöffnung (14) sowie eine die Austrittsöffnung (14) abdeckende, durch einen inneren Überdruck des Gehäuses zu öffnende und dabei einen etwa parallel zur Frontfläche (8) des Bedienpultes (2) gerichteten Strömungsweg für aus dem Gehäuse austretende Gase freigebende Entlastungsklappe (15) angeordnet ist.

2. Leistungsschalter nach Anspruch 1,
**dadurch gekennzeichnet, dass**
die Entlastungsklappe (15) in dem oben an die Frontfläche (8) des Bedienpultes (2) anschließenden Wandteil (10) aufgenommen ist, der eine Anschlagfläche (19) für die im Ruhezustand geschlossene Entlastungsklappe (15) aufweist .

3. Leistungsschalter nach Anspruch 2,
**dadurch gekennzeichnet, dass**
die Entlastungsklappe (15) am Bedienpult (2) mit einer sich parallel zur Frontfläche (8) des Bedienpultes (2) erstreckenden Scharnierachse schwenkbar angeordnet ist.

4. Leistungsschalter nach Anspruch 3,
**dadurch gekennzeichnet, dass**
die Scharnierachse nahe einer Kante am Übergang von der Frontfläche (8) zu dem die Entlastungsklappe (15) aufnehmenden oberen Wandteil (10) angeordnet ist.

5. Leistungsschalter nach einem der vorangehenden Ansprüche, **gekennzeichnet durch** eine solche Bemessung der Entlastungsklappe (15) und des diese aufnehmenden Wandteiles (10) relativ zu dem zwischen einer Betriebsstellung und einer Trennstellung des Leistungsschalters (1) in einer Schaltzelle zurückzulegenden Fahrweg, dass die Entlastungsklappe (15) in der Betriebsstellung des Leistungsschalters (1) vollständig hinter einer die Wandteile (10, 11, 12, 13) umfassenden Rahmenöffnung einer Tür (20) und in der Trennstellung nur teilweise vor der Rahmenöffnung steht.
